# EUROPEAN PATENT SPECIFICATION

(11) **EP 3 129 226 B1**
(45) Date of publication and mention of the grant of the patent: **29.09.2021**
(21) Application number: 15716426.0
(22) Date of filing: 07.04.2015
(51) Int. Cl.: B32B 27/32, G09F 3/10

(54) **BANDEROLE WITH INTEGRATED REMOVABLE PORTION**
STREIFBAND MIT INTEGRIERTEM ABNEHMBAREM TEIL
BANDELETTE À PARTIE AMOVIBLE INTÉGRÉE

(30) Priority: 08.04.2014 EP 14001282
(43) Date of publication of application: 15.02.2017
(73) Proprietor: Amcor Flexibles Sélestat SAS, 92052 Paris la Défense CEDEX (FR)
(72) Inventor: RICK, Jean-Luc, 67550 Vendenheim (FR)
(74) Representative: Vossius & Partner Patentanwälte Rechtsanwälte mbB
(86) International application number: PCT/EP2015/000733
(87) International publication number: WO 2015/154869

(56) References cited:
- US-A- 4 398 985
- US-A1- 2005 079 322

## Description

This invention relates to banderoles with integrated sticker used in the production of food containers and a method for producing said food containers.

Nowadays food and beverages are regularly produced, stored and sold in some kind of packaging. The various packaging forms used comprise very often containers having flexible, semi-rigid or rigid container walls. For instance yoghurt is regularly produced and filled in cylindrical containers made of plastics. The containers have a filling opening which is usually sealed with a foil, e.g. made of aluminium or a multilayered material which can also comprise aluminium. The side walls of such containers may be left blank or may comprise some kind of label that has been added during or after the production process. Another possibility of a label that may be added is banderoles. Said banderoles are wrapped around the container and in most cases completely cover the side walls of the food containers. Of course, the banderoles have been printed on in order to add some kind of design or information, e.g. information about the content of the food container or information of legal nature and which has to be shown on the food containers in order to meet regulatory requirements. Further, there may be removable labels arranged on the food container, in particular on the banderole. This may be done in order to further increase the attractiveness of the banderole. The removable label may carry any type of further information or picture. The label can be used for instance to mark limited or special editions of the food product, e.g. a special flavor or some pictures to make it attractive. The label can also serve as redeemable coupon or tag for a competition.

Although it is known that labels and banderoles may be arranged on food containers during their production process, e.g. in in-mold production processes, removable labels, such as stickers, usually have to be added in an additional production step. This renders the production process more complicated and also more expensive since the filled and sealed food containers have to pass through a second packaging machine that arranges the removable label or sticker in the proper position on the food container.

The object of the present invention is to provide a banderole having an integrated sticker eliminating the need for subsequent arrangement of such sticker on the produced food container. It is a further object of the present invention to provide a production method of food containers using a banderole having an integrated sticker.

The object is achieved by a banderole according to the present invention as defined in claim 1 and a method as defined in claim 9. Further preferred embodiments are subject to the dependent claims.

A banderole according to the present invention has a multilayered structure. It comprises at least a print layer, a first support layer, a first adhesive layer, a second support layer and a second adhesive layer. The first adhesive layer comprises a pressure sensitive adhesive. The print layer is not necessarily a continuous layer. It may also comprise a print that covers only a part of a first support layer. The print layer is printed on a rotogravure printing machine. Other industrial printing machines, e.g. digital printing systems, may also be used. The first adhesive layer provides a releasable adherence at least on a part of the interfacing area between the first adhesive layer and the second support layer, that means, the print layer, the first support layer and the first adhesive layer may be removed from the second support layer in the area of the releasable adherence. The area of releasable adherence preferably extends over the whole interfacing area between the first adhesive layer and the second support layer of the banderole. In the area of the releasable adherence a removable portion is formed by a part of the print layer, the first support layer and the first adhesive layer. The size and shape of the removable portion is defined by a continuous tear line, said tear line extends through the entire print layer, the first support layer and the first adhesive layer. The tear line is achieved by mechanical cutting or laser cutting. Other methods introducing a continuous tear line may also be used. The continuous tear line may also be done in the form of a perforation line. The continuous tear line may have any size and shape. As the area of releasable adherence between the interfacing area of the first adhesive layer and the second support layer preferably extends over the entire interfacing area, the sticker, that is the removable portion, may extend over the whole banderole. The releasable adherence in combination with the continuous tear line facilitates the removal of the removable portion.

The banderole according to the present invention having an integrated removable portion provides the advantage that the removable portion is directly integrated in the packaging when the banderole has been affixed to a food container. This simplifies the production process of food containers comprising such a banderole. In addition, it reduces the costs for a packaging having such a removable portion substantially. Further, since the removable portion is integrated in the banderole there is no need for the positioning of an additional portion on the banderole whereby the precise and right positioning is quite difficult to achieve.

In preferred embodiment of the banderole according to the present invention the first adhesive layer consists of a pressure sensitive adhesive. Pressure-sensitive adhesives form a bond simply by the application of light pressure to marry the adhesive with the adherend. Pressure sensitive adhesives do not require a hardening process in contrast to structural adhesives that form a permanent bond.

In another preferred embodiment of the banderole the second adhesive layer comprises a hot melt adhesive. Hot melt adhesives are structural adhesives forming a permanent bond. When the banderole is affixed to the food container the second adhesive layer faces the outer wall of the food container and provides a secure and permanent bonding of the banderole to the food container.

In a further preferred embodiment of the banderole the first support layer comprises paper. Such papers preferably are white coated papers which have high printing quality properties. Although white coated paper is a preferred material for the first support layer, said layer may also comprise plastic or aluminium.

In another preferred embodiment of the banderole the second support layer comprises silicone paper. Although, silicone paper is the preferred material the second support layer is comprised of, the material may also be a plastic, e.g. polystyrene. Another plastic material that may be used is polypropylene or polyester. In the embodiment wherein the second support layer comprises a polymer the preferred polymer is polyester.

In a preferred embodiment of the banderole the removable portion is a sticker. A sticker is a type of label: a piece of printed paper or plastic with pressure sensitive adhesive on one side. They can be used for decoration or information purposes. Stickers are very widely used when an object requires identification with a word or idea. Brand stickers may be attached to products to label these products as coming from a certain company. They may also be used to describe characteristics of the products that would not be obvious from simple examination.

In another preferred embodiment of the banderole there is an overlacquer layer arranged on the print layer. The overlacquer layer protects the print layer and also improves the appearance of the visible banderole surface.

A method for the production of food containers that include a banderole according to the present invention comprises the following steps:
In a first step a banderole that has a multilayer structure is provided. The multilayer structure comprises a print layer, a first support layer, a first adhesive layer comprising a pressure sensitive adhesive, a second support layer and a second adhesive layer. These layers are laminated whereby the first adhesive layer provides a releasable adherence at least on a part of the interfacing area between the first adhesive layer and the second support layer. Within the area of releasable adherence a removable portion is arranged. The removable portion is formed by a part of the print layer, the first support layer and the first adhesive layer. The size and the shape of the removable portion is defined by a continuous tear line, said tear line extends through the entire print layer, the entire first support layer and the entire first adhesive layer and the releasable adherence and the continuous tear line facilitate the removal of the removable portion.

In a next step the banderole which is preferably wound up on a roll is unwound, transferred and positioned in a mold. The mold defines a form of a container having a base and side walls. The banderole is positioned in the mold such that the print layer faces the side walls of the mold whereas the second adhesive layer of the banderole faces the inner space of the mold. The banderole is cut in strips and then positioned in the mold; further, they are cut at an appropriate length such that a single banderole is positioned in each mold.

In subsequent step a thermo-formable web is positioned on an upper opening of the mold containing the banderole. A stamping tool is then deep drawing the thermo-formable web into the mold thereby forming the container. In the course of the deep drawing step the outer wall of the container contacts and firmly adheres to the second adhesive layer the multilayered structure of the banderole.

The thermo-formable web preferably comprises or is made of polystyrene. Other suitable polymers are polypropylene (PP), polyethylene terephtalate (PET) and poly lactic acid (PLA). Further, the thermo-formable web, for polystyrene, is heated to a temperature in the range of 120°C to 140°C, preferably to about 130°C. During of the deep drawing the thermo-formable web is cooled down to a temperature in the range of 40°C to 50°C, preferably to about 45°C. Therefore, the adhesive of the second adhesive layer must react and bond to the outer wall of the deep drawn container at low temperatures in the range of 50°C to 70°C. In addition, the adhesive must have specific frictional properties.

The banderole according to the present invention may be used in the production of food containers, in particular food containers for yoghurt.

Preferably, the production of food containers comprising a banderole according to the present invention is performed on Form-Fill-Seal machines (FFS machines). This means, the production of the food container by deep drawing including the affixing of the banderole on the food container is done by the same machine which in a subsequent step fills the food container and finally seals the filling opening of the food container.

In an actual example of the banderole according to the present invention the different layers are as follows, the print layer shows on a coloured background the flavour of the yoghurt, the brand name of the manufacturer as well as further compulsory information such as food facts, ingredients etc. The print layer further can comprises QR-codes carrying additional information. The print layer also shows characters of the loony tunes^{®}, such as tweety^{®}, silvester^{®}, bugs bunny^{®} etc. These characters are printed within the removable portion and as the removable portion can easily be removed from the banderole, the pictures of these characters can be removed from the banderole and be used as stickers. The print layer is printed on precutted white paper having a grammage of 70 g/m² or more. On the side of the precutted paper opposite to the print layer there is a layer of pressure sensitive adhesive arranged. The pressure sensitive adhesive releasably adheres these first three layers to the silicone paper as the second support layer. The silicone paper has a grammage of 45 g/m². On the side of the silicone paper opposite the side contacting the pressure sensitive adhesive there is a hot melt arranged.

The banderole according to the present invention is explained in more detail below with reference to exemplary embodiments in the drawings, in which, purely schematically:
- Fig. 1: shows a cross-section of a typical banderole in the prior art;
- Fig 2: shows a cross-section of a banderole according to the present invention;
- Fig. 3: shows a cross-section of a further embodiment the banderole according to the present invention;
- Fig. 4: shows a top view of a banderole according to the present invention.

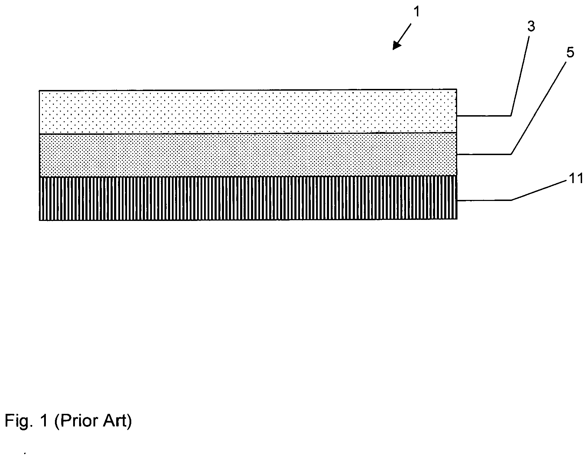

Fig. 1 shows a cross-section of a typical banderole in the prior art. The cross-section illustrates the layered structure of the banderole 1. Usually the banderoles have three layers, a print layer 3, a support layer 5 and an adhesive layer 11. The adhesive layer 11 provides the secure affixing to the food container (not shown).

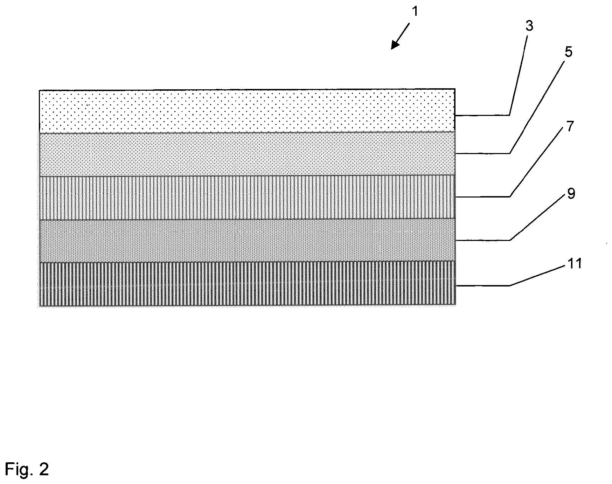

Fig. 2 shows a cross-section of a banderole according to the present invention. The banderole 1 has a multilayered structure. In this embodiment the banderole 1 comprises five layers, a print layer 3, a first support layer 5, a first adhesive layer 7, a second support layer 9 and a second adhesive layer 11. The second adhesive layer provides for the secure bonding to the food container. The first adhesive layer 7 may comprise a pressure sensitive adhesive which confers a releasable adherence of the print layer 3, the first support layer 5 and the adhesive layer 7 to the second support layer. The print layer 3 may comprise one or more printing inks or colors. Further, the print layer 3 may not be a continuous film it may cover only a part of the first support layer 5.

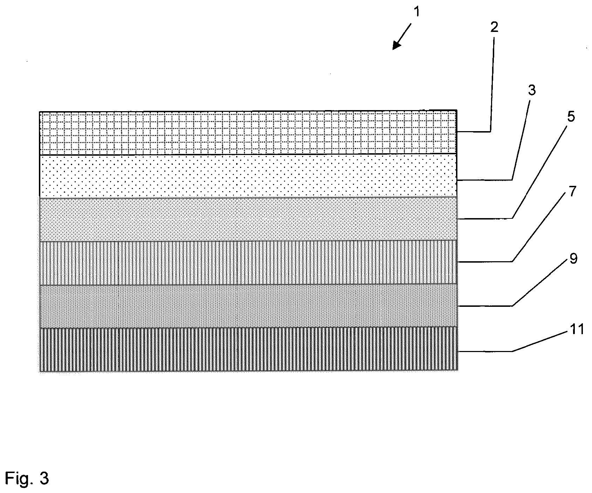

Fig. 3 shows a cross-section of a further embodiment the banderole according to the present invention.

In this embodiment the banderole 1 comprises six layers. In addition to a print layer 3, a first support layer 5, a first adhesive layer 7, a second support layer 9 and a second adhesive layer 11 the banderole 1 comprises an overlacquer layer 2. The overlacquer layer 2 is arranged on the print layer 3 that is visible from the outside. Thus the sequence of the layers from a banderole affixed on a food container (not shown) is from outside to inside, overlacquer layer 2, print layer 3, first support layer 5, first adhesive layer 7, second support layer 9, and second adhesive layer 11. The latter adhesive layer provides for the secure bonding to the food container.

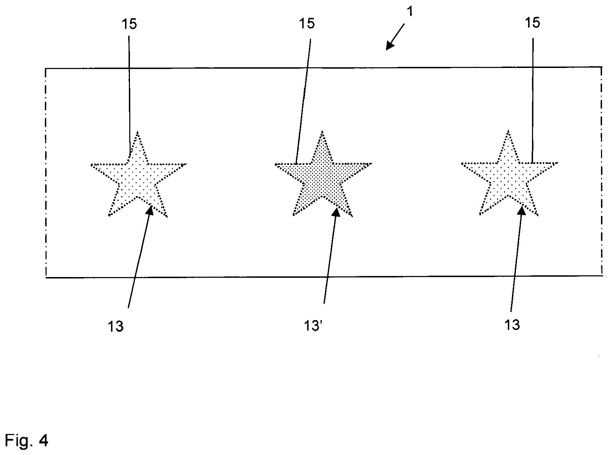

Fig. 4 shows a top view of a banderole according to the present invention. The shown banderole 1 comprises three stickers 13 and 13' in the form of stars. The stickers 13 and 13' differ in their pattern. The form of the stickers 13 and 13' is defined by the continuous tear line 15. The form of the stickers 13 and 13' does not necessarily have to be the same. It is possible that the banderole 1 has stickers integrated in different forms and colors.

## Claims

1. Banderole having a multilayer structure whereby the multilayer structure comprises a print layer (3), a first support layer (5), a first adhesive layer (7) comprising a pressure sensitive adhesive, a second support layer (9), and a second adhesive layer (11), whereby the first adhesive layer (7) provides a releasable adherence at least on a part of the interfacing area between the first adhesive layer (7) and the second support layer (9), and whereby within the area of releasable adherence a removable portion (13, 13') formed by a part of the print layer (3), the first support layer (5) and the first adhesive layer (7) is defined in size and shape by a continuous tear (15) line that extends through the entire print layer (3), the first support layer (5) and the first adhesive layer (7) and wherein the releasable adherence and the continuous tear line (15) facilitate the removal of the removable portion.

2. Banderole according to claim 1, wherein the first adhesive layer consists of a pressure sensitive adhesive.

3. Banderole according to claim 1, wherein the second adhesive layer (11) comprises a hot melt adhesive.

4. Banderole according to claim 1, wherein the first support layer (5) comprises paper.

5. Banderole according to claim 1, wherein the second support layer (9) comprises silicone paper.

6. Banderole according to claim 1, wherein the second support layer (9) comprises a polymer, preferably polyethylene.

7. Banderole according to claim 1, wherein an overlacquer layer (2) is arranged on the print layer (3).

8. Banderole according to claim 1, wherein the removable portion (13, 13') is a sticker.

9. Method for the production of food containers comprising the steps, providing a banderole having a multilayer structure whereby the multilayer structure comprises a print layer (3), a first support layer (5), a first adhesive layer (7) comprising a pressure sensitive adhesive, a second support layer (9), and a second adhesive layer (11),
laminating the layers whereby the first adhesive layer (7) provides a releasable adherence at least on a part of the interfacing area between the first adhesive layer (7) and the second support layer (9), and whereby within the area of releasable adherence a removable portion (13, 13') formed by a part of the print layer (3), the first support layer (5) and the first adhesive layer (7) is defined in size and shape by a continuous tear (15) line that is scored and which extends through the entire print layer (3), the first support layer (5) and the first adhesive layer (7) and wherein the releasable adherence and the continuous tear line (15) facilitate the removal of the removable portion,
positioning the banderole in a mold, the mold defining the form of a container and the print layer of the banderole (1) facing the mold wall
positioning a thermo-formable web on an upper opening of the mold and subsequently deep drawing the thermo-formable web in the mold thereby forming the container and firmly adhering the banderole (1) to the container through the second adhesive layer (11) of multilayered structure of the banderole (1).

10. Use of the banderole according to any of claim 1 to 8 in the production of food containers.

## Patentansprüche

1. Streifband mit einer Mehrschichtstruktur, wobei die Mehrschichtstruktur eine Druckschicht (3), eine erste Stützschicht (5), eine erste Klebeschicht (7), die einen selbstklebenden Klebstoff umfasst, eine zweite Stützschicht (9) und eine zweite Klebeschicht (11) umfasst, wobei die erste Klebeschicht (7) eine lösbare Klebung an mindestens einem Teil der Grenzfläche zwischen der ersten Klebeschicht (7) und der zweiten Stützschicht (9) bereitstellt, und wobei innerhalb der Fläche der lösbaren Klebung ein entfernbarer Anteil (13, 13'), der durch einen Teil der Druckschicht (3), der ersten Stützschicht (5) und der ersten Klebeschicht (7) gebildet wird, in Größe und Gestalt durch eine kontinuierliche Reißlinie (15) definiert wird, die sich durch die gesamte Druckschicht (3), die erste Stützschicht (5) und die erste Klebeschicht (7) erstreckt, und wobei die lösbare Klebung und die kontinuierliche Reißlinie (15) die Entfernung des entfernbaren Anteils erleichtern.

2. Streifband nach Anspruch 1, wobei die erste Klebeschicht aus einem selbstklebenden Klebstoff besteht.

3. Streifband nach Anspruch 1, wobei die zweite Klebeschicht (11) einen Heißschmelzklebstoff umfasst.

4. Streifband nach Anspruch 1, wobei die erste Stützschicht (5) Papier umfasst.

5. Streifband nach Anspruch 1, wobei die zweite Stützschicht (9) Silikonpapier umfasst.

6. Streifband nach Anspruch 1, wobei die zweite Stützschicht (9) ein Polymer umfasst, vorzugsweise Polyethylen.

7. Streifband nach Anspruch 1, wobei eine Überlackschicht (2) auf der Druckschicht (3) angeordnet ist.

8. Streifband nach Anspruch 1, wobei der entfernbare Anteil (13, 13') ein Aufkleber ist.

9. Verfahren zur Herstellung von Nahrungsmittelbehältern, umfassend die Schritte:
Bereitstellen eines Streifbands mit einer Mehrschichtstruktur, wobei die Mehrschichtstruktur eine Druckschicht (3), eine erste Stützschicht (5), eine erste Klebeschicht (7), die einen selbstklebenden Klebstoff umfasst, eine zweite Stützschicht (9) und eine zweite Klebstoffschicht (11) umfasst,
Laminieren der Schichten, wobei die erste Klebeschicht (7) eine lösbare Klebung an mindestens einem Teil der Grenzfläche zwischen der ersten Klebeschicht (7) und der zweiten Stützschicht (9) bereitstellt, und wobei innerhalb der Fläche der lösbaren Klebung ein entfernbarer Anteil (13, 13'), der durch einen Teil der Druckschicht (3), der ersten Stützschicht (5) und der ersten Klebeschicht (7) gebildet wird, in Größe und Gestalt durch eine kontinuierliche Reißlinie (15) definiert wird, die gekerbt ist und sich durch die gesamte Druckschicht (3), die erste Stützschicht (5) und die erste Klebeschicht (7) erstreckt, und wobei die lösbare Klebung und die kontinuierliche Reißlinie (15) die Entfernung des entfernbaren Anteils erleichtern,
Positionieren des Streifbands in einer Form, wobei die Form die Formgebung eines Behälters definiert und die Druckschicht des Streifbands (1) zu der Formwand weist,
Positionieren einer thermoformbaren Bahn auf einer oberen Öffnung der Form und nachfolgendes Tiefziehen der thermoformbaren Bahn in die Form, wodurch der Behälter gebildet wird und das Streifband (1) durch die zweite Klebeschicht (11) der mehrschichtigen Struktur des Streifbands (1) fest an den Behälter geklebt wird.

10. Verwendung des Streifbands nach einem der Ansprüche 1 bis 8 in der Herstellung von Nahrungsmittelbehältern.

## Revendications

1. Banderole ayant une structure multicouche, la structure multicouche comprenant une couche d'impression (3), une première couche de support (5), une première couche adhésive (7) comprenant un adhésif sensible à la pression, une deuxième couche de support (9) et une deuxième couche adhésive (11), la première couche adhésive (7) produisant une adhérence pouvant être relâchée au moins sur une partie de la zone d'interface entre la première couche adhésive (7) et la deuxième couche de support (9), et à l'intérieur de la zone d'adhérence pouvant être relâchée, une partie amovible (13, 13') formée d'une partie de la couche d'impression (3), de la première couche de support (5) et de la première couche adhésive (7) étant délimitée en taille et en forme par une ligne de déchirure continue (15) qui s'étend à travers la totalité de la couche d'impression (3), de la première couche de support (5) et de la première couche adhésive (7) et l'adhérence pouvant être relâchée et la ligne de déchirure continue (15) facilitant le retrait de la partie amovible.

2. Banderole selon la revendication 1, dans laquelle la première couche adhésive est constituée d'un adhésif sensible à la pression.

3. Banderole selon la revendication 1, dans laquelle la deuxième couche adhésive (11) comprend un adhésif thermofusible.

4. Banderole selon la revendication 1, dans laquelle la première couche de support (5) comprend du papier.

5. Banderole selon la revendication 1, dans laquelle la deuxième couche de support (9) comprend du papier silicone.

6. Banderole selon la revendication 1, dans laquelle la deuxième couche de support (9) comprend un polymère, de préférence du polyéthylène.

7. Banderole selon la revendication 1, dans laquelle une couche de vernis de surimpression (2) est disposée sur la couche d'impression (3).

8. Banderole selon la revendication 1, dans laquelle la partie amovible (13, 13') est un autocollant.

9. Procédé de fabrication de récipients alimentaires comprenant les étapes consistant à
fournir une banderole ayant une structure multicouche, la structure multicouche comprenant une couche d'impression (3), une première couche de support (5), une première couche adhésive (7) comprenant un adhésif sensible à la pression, une deuxième couche de support (9) et une deuxième couche adhésive (11),
stratifier les couches, la première couche adhésive (7) produisant une adhérence pouvant être relâchée au moins sur une partie de la zone d'interface entre la première couche adhésive (7) et la deuxième couche de support (9), et à l'intérieur de la zone d'adhérence pouvant être relâchée, une partie amovible (13, 13') formée d'une partie de la couche d'impression (3), de la première couche de support (5) et de la première couche adhésive (7) étant délimitée en taille et en forme par une ligne de déchirure continue (15) qui est prédécoupée et qui s'étend à travers la totalité de la couche d'impression (3), de la première couche de support (5) et de la première couche adhésive (7) et l'adhérence pouvant être relâchée et la ligne de déchirure continue (15) facilitant le retrait de la partie amovible,
positionner la banderole dans un moule, le moule délimitant la forme d'un récipient et la couche d'impression de la banderole (1) faisant face à la paroi du moule,
positionner une bande thermoformable sur une ouverture supérieure du moule puis soumettre à un formage profond la bande thermoformable dans le moule en formant ainsi le récipient et en faisant adhérer fermement la banderole (1) au récipient au moyen de la deuxième couche adhésive (11) de la structure multicouche de la banderole (1).

10. Utilisation de la banderole selon l'une quelconque des revendications 1 à 8 dans la fabrication de récipients alimentaires.
